# EUROPÄISCHE PATENTSCHRIFT

(11) **EP 1 188 592 B1**
(45) Veröffentlichungstag und Bekanntmachung des Hinweises auf die Patenterteilung: **02.05.2007**
(21) Anmeldenummer: 01116517.2
(22) Anmeldetag: 07.07.2001
(51) Int. Cl.: B60J 5/06, E05D 15/10

(54) **Schiebetürvorrichtung für ein Kraftfahrzeug**
Dispositif pour porte coulissante pour véhicule
Sliding door device for a vehicle

(30) Priorität: 15.09.2000 DE 10045589
(43) Veröffentlichungstag der Anmeldung: 20.03.2002
(73) Patentinhaber: Dr.Ing. h.c.F. Porsche Aktiengesellschaft, 70435 Stuttgart (DE)
(72) Erfinder: Kleemann, Klaus, 75217 Birkenfeld (DE)

(56) Entgegenhaltungen:
- EP-A- 1 004 738
- DE-A- 3 310 559
- DE-A- 4 305 598

## Beschreibung

Die Erfindung betrifft eine Schiebetürvorrichtung für ein Kraftfahrzeug nach dem Oberbegriff des Patentanspruchs 1.

Schiebetüren an Kraftfahrzeugen erfordern relativ wenig Raum für die Öffnungsbewegung, da sie beim Öffnen mit geringem Abstand zu den entsprechenden Aufbauwänden bewegt werden. Dies vereinfacht nicht nur das Einparken, sondern auch das Be- und Entladen der mit solchen Türen ausgestatteten Kraftfahrzeuge. Es ist jedoch aus Gründen der Sicherheit wichtig, dass sich die jeweilige Schiebetür auch nach einer havariebedingten Aufbaudeformation, weitgehend problemlos öffnen lässt, damit der Zugang zum Passagier- oder Laderaum des Kraftfahrzeugs gewährleistet ist.

Eine Schiebetür für einen Personenkraftwagen behandelt die DE-PS 1 780 577, die mit Schwenkhebeln und Gleitschienen ausgestattet ist. Diese Schiebetür wird gemäss der Beschreibung des Standes der Technik der DE 34 14 890 A1 gewürdigt. Dabei wird auf den Sicherheitsfaktor verwiesen, nämlich, dass nach einem Unfall eine Tür dieser Bauart schnell und problemlos geöffnet werden kann. Die technische Lösung der Fahrzeugtür nach der oben genannten DE 34 14 890 A1 zeichnet sich dadurch aus, dass sie grundsätzlich als Schiebetür, jedoch unter besonderen Umständen z.B. nach einem Unfall als Schwenktür arbeitet. Hierfür sind besonders anspruchsvolle zusätzliche konstruktive Maßnahmen erforderlich, die dem Bestreben einfache, gewichtsreduzierende und übersichtliche Schiebetürkonzepte darzustellen, entgegenstehen.

Darüber hinaus ist eine Schiebetür für ein Kraftfahrzeug bekannt - EP 1 004 738 A2 -, die eine Schienenführung und eine Verriegelungsvorrichtung zur Steuerung der Bewegungsabläufe der besagten Schiebetür umfasst. Zum Öffnen und Schließen der Schiebetür ist ein Getriebe und ein Motor vorgesehen, der elektrisch betrieben wird.

Es ist daher Aufgabe der Erfindung eine Schiebetürvorrichtung für ein Kraftfahrzeug zu schaffen, wobei sich eine Schiebetür bei guter Öffnungs- und Schließfunktion auch nach einer Deformation des Aufbaus des Kraftfahrzeugs, verursacht bspw. durch einen Unfall, ohne weiteres öffnen lässt.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Schiebetür sich zum einen dank der Laufeinrichtung und der Führungsschiene funktionsgerecht öffnen sowie schließen lässt und zum anderen aufgrund der Sicherheitsvorrichtung auch dann gezielt geöffnet werden kann, wenn der Aufbau des Kraftfahrzeugs z.B. infolge einer Havarie, gerade im Bereich der Führungsschiene, deformiert ist. Die Sicherheitsvorrichtung wird durch einen Befestigungsabschnitt und einen Führungsabschnitt der Führungsschiene gebildet, zwischen denen eine einfach vorzusehende Sollbrucheinrichtung ausgebildet ist. Diese Sollbrucheinrichtung kann durch Sollbruchstege dargestellt werden, die den Befestigungsabschnitt mit dem Führungsabschnitt verbinden, wobei sich zur Bildung dieser Sollbruchstege in Längsrichtung der Führungsschiene verlaufende Schlitzdurchbrüche zwischen Befestigungsabschnitt und Führungsabschnitt eignen. Schließlich wird die angestrebte Funktion der Sicherheitsvorrichtung insbesondere dann erreicht, wenn sie sich lediglich über einen Teilbereich der Gesamtlänge der Führungsschiene erstreckt.

In der Zeichnung wird ein Ausführungsbeispiel der Erfindung gezeigt, das nachstehend näher beschrieben wird.

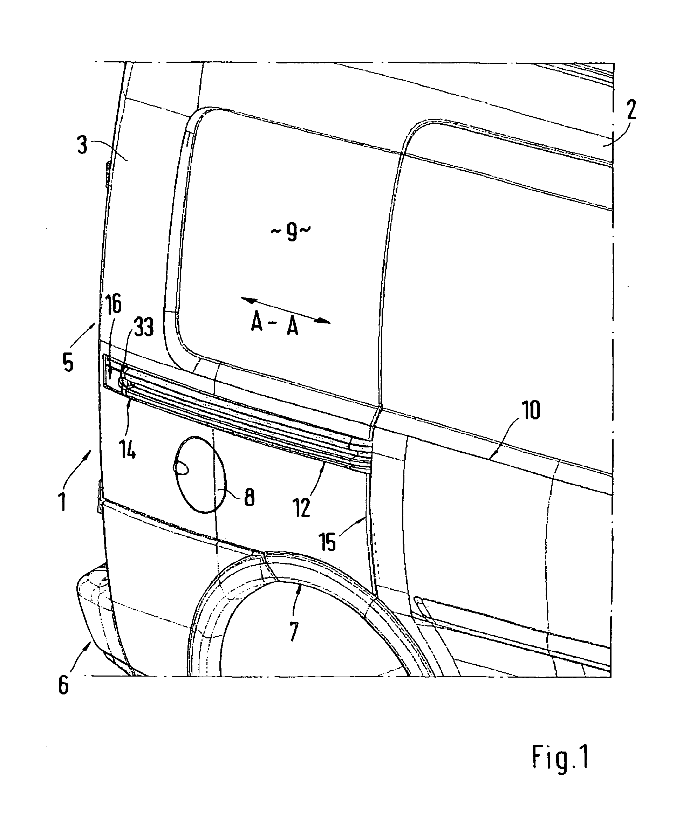

Es zeigen
- Fig. 1: eine Schrägansicht von vorne auf eine Teilseitenwand eines Kraftfahrzeugs mit der erfindungsgemäßen Schiebetür,
- Fig. 2: eine Teilseitenansicht des Kraftfahrzeugs nach Fig. 1 mit eine Führungsschiene der Schiebetür in größerem Maßstab,

- Fig. 3: einen Schnitt nach der Linie III-III der Fig. 2 in größerem Maßstab,
- Fig. 4: eine Ansicht entsprechend Fig. 3 mit einer anderen Ausführungsform,
- Fig. 5: eine Schrägansicht auf einen inneren Abschnitt der Führungsschiene der Schiebetür gemäss Fig.1 in größerem Maßstab,
- Fig. 6: eine Ansicht entsprechend Fig. 5.

Ein Kraftfahrzeug 1 umfasst einen Aufbau 2 mit einer Seitenwand 3, die von einem als Rückwand 4 ausgebildeten hinteren aufrechten Endbereich 5 begrenzt wird. Von der Rückwand 3 weggeführt ist ein Stossfänger 6, der sich über die breite des Kraftfahrzeugs 1 erstreckt und Stosskräfte definiert aufnimmt. Die Seitenwand 3 weist einen Radauschnitt 7 für ein Hinterrad - letzteres ist nicht dargestellt -, eine Tankklappe 8, ein Seitenfenster 9 und eine Schiebetür 10 auf.

Die Schiebetür 10 wirkt unter Vermittlung einer Laufeinrichtung 11 mit einer Führungsschiene 12 zusammen, die in etwa horizontal ausgerichtet ist und an der Außenseite 13 der Seitenwand 3 verläuft. Damit die Schiebetür 10 nach einer bspw. unfallbedingten Deformation der Seitenwand 3, eingeleitet über die Rückwand 4, problemlos geöffnet werden kann, ist eine Sicherheitsvorrichtung 14 vorgesehen, die derart ausgebildet ist, dass nach zumindest örtlicher Deformation der Seitenwand 3 im Bereich der Führungsschiene 12 eine Bewegung der Laufeinrichtung 11 durchführbar ist.

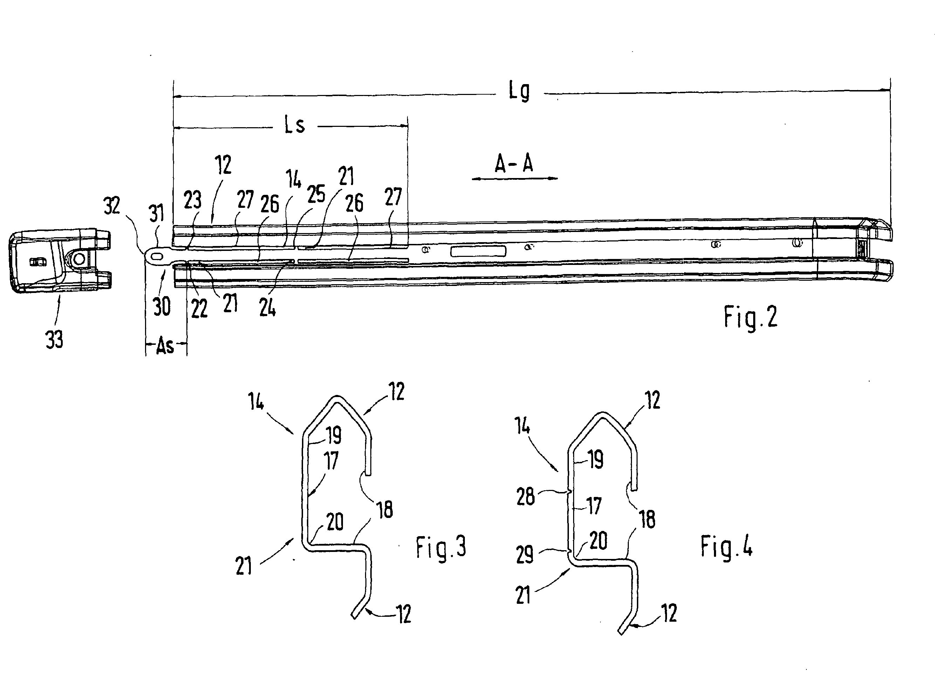

Die Sicherheitsvorrichtung 14 ist an der Führungsschiene 12 vorgesehen, die einerseits um eine aufrechte Türöffnungswand 15 etwa rechtwinkelig herumgeführt ist und entfernt hiervon bzw. benachbart der Rückwand 4 mit einem Endstück 16 versehen ist. Die Führungsschiene 12 ist zur Aufnahme der Laufeinrichtung 11 mit einer entsprechenden Profilierung und definierten Widerstandsmomentauslegung versehen, wobei die Führungsschiene 11 einen Befestigungsabschnitt 17 und einen Führungsabschnitt 18 besitzt. Der Befestigungsabschnitt 17 ist nach Art einer Platte ausgeführt und an die Seitenwand 3 direkt angeschlossen sowie an dieser befestigt. Zu beiden Seiten 19,20 dieses Befestigungsabschnitt 17 erstreckt sich der Führungsabschnitt 17, der vom Befestigungsabschnitt 18 getrennt werden kann. Hierfür ist eine Sollbrucheinrichtung 21 - Fig. 2 -. vorgesehen, welche Sollbrucheinrichtung 21 zwischen Befestigungsabschnitt 17 und Führungsabschnitt 18 eingearbeitet ist. Die Sollbrucheinrichtung 21 weist mehrere mit Abstand zueinander angeordnete Sollbruchstege 22,23 und 24,25 auf, die quer zur Längsrichtung A-A - entspricht Fahrzeuglängsrichtung - der Führungsschiene 11 verlaufen und sich zwischen Befestigungsabschnitt 17 und Führungsabschnitt 18 erstrecken. Die Sollbruchstege 22,23 und 24,25 werden durch in besagte Längsrichtung A-A ausgerichtete und parallel zueinander angeordnete Schlitzdurchbrüche 26,27 gebildet. Anstelle der Schlitzdurchbrüche 26,27 ist aber auch denkbar die Sollbrucheinrichtung 21 durch Einkerbungen 28,29 - Fig. 4 - zu ersetzen.

Die Länge Ls der Sollbrucheinrichtung 21 erstreckt sich lediglich über einen Teilbereich der Gesamtlänge Lg der Führungsschiene 11, wobei die Sollbrucheinrichtung 21 bzw. ein freies Ende 30 entfernt von der Türöffnungswand 15 verläuft, anders ausgedrückt das freie Ende 30 ist benachbart dem Endbereich 5 angeordnet. Das freie Ende 30 der Sollbrucheinrichtung 21 ist als zungenartige über die Führungsschiene 12 hinausragende Verlängerung 31 des Befestigungsabschnitts 17 ausgeführt, die mit einer Öffnung 32 versehen ist, wobei ein Schließteil 32 der Führungsschiene 12 die Verlängerung 31 abdeckt. Diese Öffnung dient 32 zur Aufnahme einer Befestigungsschraube, mit der der Befestigungsabschnitt 17 an Seitenwand 3 in Lage gehalten wird. Darüber hinaus erfolgt die Halterung der Führungsschiene 12 mittels mehrerer Befestigungsmittel 34. Zur Unterstützung der Bruchfunktion sind die Sollbruchstege 22,23 mit Abstand As zum freien Ende 30 der Sollbrucheinrichtung 21 angeordnet.

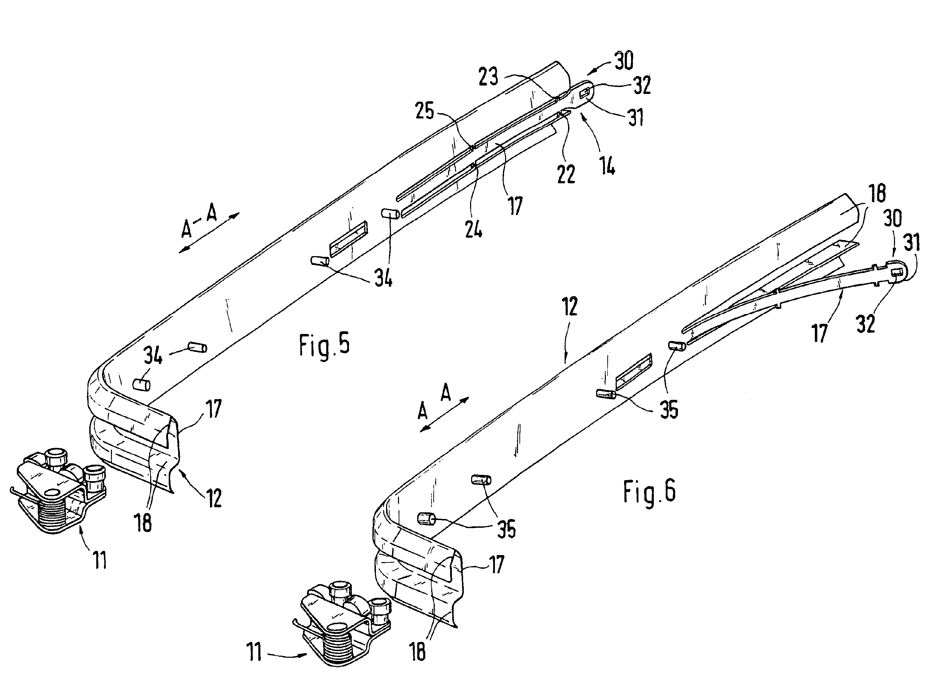

Nach einem definierten auf die Rückwand 4 erfolgten Havariestoß der zur Deformation der Seitenwand 3 führt, wird der Befestigungsabschnitt 17 von dem Führungsabschnitt 18 getrennt d.h. er nimmt eine von der Deformation der Seitenwand verursachte Lage ein. - Fig. 6 - dagegen behält der Führungsabschnitt 18 - auch aufgrund seiner Formsteifigkeit - eine Position, die ein gezieltes Öffnen der Schiebetür 10 ermöglicht.

## Patentansprüche

1. Schiebetürvorrichtung für ein Kraftfahrzeug (1), wobei eine Schiebetür (10) an einer Seitenwand (3) eines Aufbau (2) des Kraftfahrzeugs (1) angeordnet ist und unter Vermittlung einer Laufeinrichtung (11) mit einer an der Seitenwand (3) des Aufbaus (2) angebrachten Führungsschiene (12) zusammenwirkt, wobei zur Unterstützung der Öffnung der Schiebetür (10) nach einer unfallbedingten Deformation des Aufbaus (2) eine Sicherheitsvorrichtung (14) vorgesehen ist, **dadurch gekennzeichnet, dass** die Sicherheitsvorrichtung (14) an der Führungsschiene (12) vorgesehen ist, wobei die Führungsschiene (12) einen mit der Seitenwand (3) zusammenwirkenden, nach Art einer Platte ausgeführten Befestigungsabschnitt (17) und einen von diesem trennbaren Führungsabschnitt (18) für die Laufeinrichtung (11) aufweist.

2. Schiebetürvorrichtung nach Anspruch 1, **dadurch gekennzeichnet, dass** zwischen Befestigungsabschnitt (17) und Führungsabschnitt (18) eine Sollbrucheinrichtung (21) vorgesehen ist.

3. Schiebetürvorrichtung nach Anspruch 2, **dadurch gekennzeichnet, dass** die Sollbrucheinrichtung (21) mehrere mit Abstand zueinander angeordnete Sollbruchstege (22,23 und 24,25) aufweist, die zwischen Befestigungsabschnitt (17) und Führungsabschnitt (18) angeordnet sind.

4. Schiebetürvorrichtung nach Anspruch 3, **dadurch gekennzeichnet, dass** die Sollbruchstege (22,23 und 24,25) durch Schlitzdurchbrüche (26,27) zwischen Befestigungsabschnitt (17) und Führungsabschnitt (18) gebildet werden.

5. Schiebetürvorrichtung nach Anspruch 2, **dadurch gekennzeichnet, dass** die Sollbrucheinrichtung (21) durch Einkerbungen (28,29) zwischen Befestigungsabschnitt (17) und Führungsabschnitt (18) gebildet werden.

6. Schiebetürvorrichtung nach einem oder mehreren der vorangehenden Ansprüche, **dadurch gekennzeichnet, dass** sich die Sollbrucheinrichtung (21) lediglich über einen Teilbereich der Gesamtlänge (Lg) der Führungsschiene (12) erstreckt.

7. Schiebetürvorrichtung nach Anspruch 5, **dadurch gekennzeichnet, dass** die Sollbrucheinrichtung (21) mit Abstand zu einer Türöffnungswand (15) der Schiebetür verläuft.

8. Schiebetürvorrichtung nach Anspruch 6, **dadurch gekennzeichnet, dass** ein freies Ende (30) der Sollbrucheinrichtung (21) benachbart dem Endbereich (5) des Aufbaus (2) angeordnet ist.

9. Schiebetürvorrichtung nach einem oder mehreren der vorangehenden Ansprüche **dadurch gekennzeichnet, dass** der Befestigungsabschnitt (17) benachbart dem freien Ende (30) mit einer zungenartigen über die Führungsschiene (12) hinausragenden Verlängerung (31) versehen ist, wobei der Befestigungsabschnitt (17) im Bereich der Verlängerung (31) mit der Seitenwand (3) verbunden ist.

10. Schiebetürvorrichtung nach einem oder mehreren der vorangehenden Ansprüche **dadurch gekennzeichnet, dass** Sollbruchstege (22,23) mit Abstand (As) zum freien Ende angeordnet sind.

## Claims

1. A sliding door device for a motor vehicle (1), wherein a sliding door (10) is arranged on a side wall (3) of a body (2) of the motor vehicle (1) and, by means of a runner (11), co-operates with a guide rail (12) mounted on the side wall (3) of the body (2), wherein a safety device (14) is provided for assisting the opening of the sliding door (10) after deformation of the body (2) in the event of an accident, **characterised in that** the safety device (14) is provided on the guide rail (12), wherein the guide rail (12) has a fastening portion (17) which co-operates with the side wall (3) and is formed in the manner of a plate, and a guide portion (18) which is detachable from the fastening portion (17) and is provided for the runner (11).

2. A sliding door device according to claim 1, **characterised in that** a break-off device (21) is provided between the fastening portion (17) and the guide portion (18).

3. A sliding door device according to claim 2, **characterised in that** the break-off device (21) has a plurality of break-off webs (22, 23 and 24, 25) which are arranged spaced apart and are arranged between the fastening portion (17) and the guide portion (18).

4. A sliding door device according to claim 3, **characterised in that** the break-off webs (22, 23 and 24, 25) are formed by slotted openings (26, 27) between the fastening portion (17) and the guide portion (18).

5. A sliding door device according to claim 2, **characterised in that** the break-off device (21) is formed by notches (28, 29) between the fastening portion (17) and the guide portion (18).

6. A sliding door device according to one or more of the preceding claims, **characterised in that** the break-off device (21) only extends over part of the overall length (Lg) of the guide rail (12).

7. A sliding door device according to claim 5, **characterised in that** the break-off device (21) extends with spacing from a door aperture wall (15) of the sliding door.

8. A sliding door device according to claim 6, **characterised in that** a free end (30) of the break-off device (21) is arranged adjacent to the end region (5) of the body (2).

9. A sliding door device according to one or more of the preceding claims, **characterised in that**, adjacent to the free end (30), the fastening portion (17) is provided with a tongue-like extension (31) projecting beyond the guide rail (12), wherein the fastening portion (17) is connected to the side wall (3) in the region of the extension (31).

10. A sliding door device according to one or more of the preceding claims, **characterised in that** break-off webs (22, 23) are arranged with spacing (As) from the free end.

## Revendications

1. Dispositif de porte coulissante pour un véhicule (1), une porte coulissante (10) étant disposée sur une paroi latérale (3) d'une carrosserie (2) du véhicule (1) et coopérant par l'intermédiaire d'un dispositif de roulement (11) avec un rail du guidage (12) placé sur la paroi latérale (3) de la carrosserie (2), un dispositif de sécurité (14) étant prévu pour soutenir l'ouverture de la porte coulissante (10) après une déformation due à un accident de la carrosserie (2), **caractérisé en ce que** le dispositif de sécurité (14) est prévu sur le rail de guidage (12), le rail de guidage (12) présentant une partie de fixation (17) coopérant avec la paroi latérale (3) est réalisé à la façon d'une plaque et une partie de guidage (18) pouvant être séparée de celle-ci pour le dispositif de roulement (11).

2. Dispositif de porte coulissante selon la revendication 1, **caractérisé en ce qu'**un dispositif de rupture théorique (21) est prévu entre la partie de fixation (17) et la partie de guidage (18).

3. Dispositif de porte coulissante selon la revendication 2, **caractérisé en ce que** le dispositif de rupture théorique (21) présente plusieurs barrettes de rupture théorique (22, 23 et 24, 25) disposées à distance les unes des autres, qui sont disposées entre la partie de fixation (17) et la partie de guidage (18).

4. Dispositif de porte coulissante selon la revendication 3, **caractérisé en ce que** les barrettes de rupture théorique (22, 23 et 24, 25) sont formées par des passages de fente (26, 27) entre la partie de fixation (17) et la partie de guidage (18).

5. Dispositif de porte coulissante selon la revendication 2, **caractérisé en ce que** les dispositifs de rupture théorique (21) sont formés par des entailles (28, 29) entre la partie de fixation (17) et la partie de guidage (18).

6. Dispositif de porte coulissante selon l'une quelconque ou plusieurs des revendications précédentes, **caractérisé en ce que** le dispositif de rupture théorique (21) s'étend uniquement sur une zone partielle de la longueur totale (Lg) du rail de guidage (12).

7. Dispositif de porte coulissante selon la revendication 5, **caractérisé en ce que** le dispositif de rupture théorique (21) est agencé à distance d'une paroi d'ouverture de porte (15) de la porte coulissante.

8. Dispositif de porte coulissante selon la revendication 6, **caractérisé en ce qu'**une extrémité (30) libre du dispositif de rupture théorique (21) est disposée à proximité de la zone d'extrémité (5) de la carrosserie (2).

9. Dispositif de porte coulissante selon l'une quelconque ou plusieurs des revendications précédentes, **caractérisé en ce que** la partie de fixation (17) est dotée à proximité de l'extrémité (30) libre d'un prolongement (31) de type lame, dépassant du rail de guidage (12), la partie de fixation (17) étant reliée dans la zone de prolongement (31) à la paroi latérale (3).

10. Dispositif de porte coulissante selon l'une quelconque ou plusieurs des revendications précédentes, **caractérisé en ce que** les barrettes de rupture théorique (22, 23) sont disposées à distance (As) de l'extrémité libre.
